# EUROPÄISCHE PATENTSCHRIFT

(11) **EP 2 140 183 B1**
(45) Veröffentlichungstag und Bekanntmachung des Hinweises auf die Patenterteilung: **22.06.2011**
(21) Anmeldenummer: 08758871.1
(22) Anmeldetag: 30.05.2008
(51) Int. Cl.: F16K 27/00, F16K 31/00, F15B 13/08

(54) **PIEZOELEKTRISCHE VENTILBATTERIE**
PIEZOELECTRIC VALVE BATTERY
BATTERIE DE SOUPAPES PIEZOELECTRIQUE

(30) Priorität: 26.07.2007 DE 102007035017
(43) Veröffentlichungstag der Anmeldung: 06.01.2010
(73) Patentinhaber: FESTO AG & Co. KG, 73734 Esslingen (DE)
(72) Erfinder: GIOUSOUF, Metin, 73732 Esslingen (DE); MUNZ, Gebhard, 73614 Schorndorf (DE)
(74) Vertreter: Abel, Martin
(86) Internationale Anmeldenummer: PCT/EP2008/004295
(87) Internationale Veröffentlichungsnummer: WO 2009/012838

(56) Entgegenhaltungen:
- EP-A- 1 251 283
- DE-C1- 19 723 388

## Beschreibung

Die Erfindung betrifft eine Ventilbatterie, mit mehreren in einer Aufreihungsrichtung rechtwinkelig zu ihren Hauptausdehnungsebenen aneinandergereihten plattenförmigen Ventileinheiten, die jeweils mindestens ein in einer die Ventileinheit in der Aufreihungsrichtung durchsetzenden ersten Aufnahmekammer angeordnetes erstes piezoelektrisches Steuerelement enthalten, durch das die fluidische Verbindung zwischen einem der betreffenden Ventileinheit individuell zugeordneten Arbeitsanschluss und einem sämtlichen Ventileinheiten gemeinsam zugeordneten internen Speisekanal der Ventilbatterie steuerbar ist.

Eine aus der DE 11 2004 000 560 T5 bekannte Ventilbatterie dieser Art enthält einen L-förmigen Basiskörper, der mit aneinandergereihten plattenförmigen Ventileinheiten bestückt ist. Jede Ventileinheit trägt in einer Aufnahmekammer einen Aktuator mit einem längenvariablen piezoelektrischen Steuerelement, das in der Lage ist, einen Arbeitsanschluss wahlweise mit einem Speisekanal oder einem Abführkanal zu verbinden. Speisekanal und Abführkanal erstrecken sich in dem L-förmigen Basiskörper, der mit den ventileinheiten bestückt ist. Offensichtlich sind die Ventileinheiten mit einer Stirnseite an den Basiskörper angebaut, ohne direkt miteinander mechanisch verbunden zu sein. Die die piezoelektrischen Steuerelemente enthaltenden Aufnahmekammern sind zur Umgebung hin offen, sodass es zur Vermeidung von Verschmutzung unerlässlich sein dürfte, bei der praktischen Anwendung noch eine Schutzhaube anzubringen.

Die EP 1 251 283 B1 beschreibt eine modulare Ventilbatterie mit in einer Aufreihungsrichtung aneinander angebauten Ventileinheiten, die jeweils ein von Vorsteuerventilen betätigtes Hauptventil beinhalten. Als Vorsteuerventile sind wahlweise Piezoventile oder Magnetventile an die Hauptventile ansetzbar. Alle Vorsteuerventile werden mittels einer zentralen Ansteuerelektronik der Ventilbatterie angesteuert.

Aus der DE 44 10 153 C1 ist ein einzelnes Piezoventil bekannt, das einen Biegewandler als piezoelektrisches Steuerelement beinhaltet. Durch elektrische Aktivierung lässt sich der Biegewandler in einer Auslenkebene auslenken, sodass er eine Kanalmündung wahlweise freigibt oder verschließt.

Schließlich offenbart die EP 0 678 676 B1 eine Ventilanordnung mit plattenartigen Ventileinheiten, die gemeinsam von einem Speisekanal und einem Abführkanal durchsetzt sind und jeweils ein Hauptventil beinhalten, das durch elektromagnetische Vorsteuerventile umschaltbar ist, um zwei Arbeitsanschlüsse wahlweise mit dem Speisekanal oder dem Abführkanal zu verbinden. Das Hauptventil verfügt über einen kolbenartigen Ventilschieber, der in einer Aufnahmekammer untergebracht ist, durch die sich der Speisekanal und der Abführkanal hindurch erstrecken.

Piezoventile haben gegenüber Magnetventilen den Vorteil, dass sie sich mit kleineren Abmessungen realisieren lassen und ihr Stromverbrauch geringer ist. Andererseits sind bei der eingangs diskutierten Ventilbatterie gemäß DE 11 2004 000 560 T5 einer Verringerung der Abmessungen durch den zwingend erforderlichen Basiskörper gewisse Grenzen gesetzt. Im Falle der EP 1 251 283 B1 kann durch die Piezoventile keine Verringerung der Abmessungen erzielt werden, weil alternativ auch die Installation von Magnetventilen gewährleistet sein soll.

Eine Aufgabe der vorliegenden Erfindung besteht darin, eine kostengünstige Piezoventilbatterie mit kompakten Abmessungen zu schaffen.

Zur Lösung dieser Aufgabe ist vorgesehen, dass der Speisekanal einen sämtliche Ventileinheiten in der Aufreihungsrichtung durchsetzenden Längenabschnitt aufweist, der von den miteinander in Verbindung stehenden ersten Aufnahmekammern der unter Abdichtung aneinandergesetzten Ventileinheiten gebildet ist, wobei sich in den ersten Aufnahmekammern jeweils eine mit dem Arbeitsanschluss der Ventileinheit verbundene erste Kanalmündung befindet und wobei die piezoelektrischen Steuerelemente als sich in den ersten Aufnahmekammern quer zu der Aufreihungsrichtung erstreckende Biegewandler ausgeführt sind, die abhängig von ihrem Aktivierungszustand die in der ersten Aufnahmekammer angeordnete erste Kanalmündung wahlweise freigeben oder verschließen können.

Bei dieser Ventilbatterie sitzen die piezoelektrischen Steuerelemente unmittelbar in einem die Ventileinheiten durchsetzenden Speisekanal, und zwar innerhalb von die Ventileinheiten durchsetzenden Aufnahmekammern, die bei zusammengefügten Ventileinheiten einen Längenabschnitt des Speisekanals definieren. Auf diese Weise sind kompakte Querabmessungen der Ventilbatterie möglich. Als piezoelektrische Steuerelemente sind Biegewandler vorhanden, die sich quer zu der Aufreihungsrichtung erstrecken, sodass in der Aufreihungsrichtung schmale Abmessungen der einzelnen Ventileinheiten möglich sind. Vorteilhafte Weiterbildungen der Erfindung gehen aus den Unteransprüchen hervor.

Sofern kein Erfordernis besteht, das über die Arbeitsanschlüsse zu den dort angeschlossenen Verbrauchern führende Druckmedium auch wieder durch die Ventilbatterie hindurch abzuführen, kann auf einen gesonderten internen Abführkanal der Ventilbatterie verzichtet werden. Jede Ventileinheit kann dann als 2/2-Ventil eingesetzt werden. Ist hingegen eine Abfuhr von Druckmedium gewünscht, können sämtliche Ventileinheiten von einem gemeinsam zugeordneten internen Abführkanal durchsetzt sein, über den das von den individuellen Arbeitskanälen zurückströmende Druckmedium gesammelt aus der.Ventilbatterie abführbar ist. Hierbei kann durchaus weiterhin auf nur einen Biegewandler pro Ventileinheit zurückgegriffen werden, wenn dieser in der Lage ist, eine 3/2- oder 3/3-Ventilfunktion zu erfüllen. Denkbar wäre dies beispielsweise mit einem Trimorph-Biegewandler. Als besonders vorteilhaft wird allerdings eine Bauform angesehen, bei der die Ventileinheiten über zwei in gesonderten Aufnahmekammern angeordnete Biegewandler verfügen, die jeweils eine 2/2-Ventilfunktion ausüben können, wobei durch aufeinander abgestimmte Aktivierung eine 3/2- oder 3/3-Ventilfunktionalität verwirklicht werden kann. Der eine Biegewandler steuert die Verbindung des Arbeitsanschlusses mit dem Speisekanal, der andere Biegewandler steuert die Verbindung des Arbeitsanschlusses mit dem Abführkanal, der bei einer pneumatischen Ventilbatterie einen Entlüftungskanal darstellt.

Um die interne Fluidverbindung innerhalb der einzelnen Ventileinheiten zu ermöglichen, können die erforderlichen Verbindungskanäle als in einer oder in beiden Anbauflächen der Ventileinheit verlaufende nutartige Vertiefungen ausgeführt sein, die sich bei der Herstellung durch Gießformgebung sehr einfach spanlos erzeugen lassen.

Beinhaltet eine Ventileinheit zwei Biegewandler, sind diese vorzugsweise mit zueinander paralleler Längserstreckung nebeneinanderliegend angeordnet.

Innerhalb seiner Aufnahmekammer kann jeder Biegewandler entweder mit zur Hauptausdehnungsebene der Ventileinheit paralleler oder rechtwinkeliger Auslenkebene angeordnet sein. Auch bei der als zweites genannten Variante lässt sich ein Biegewandler innerhalb einer schmalbauenden Ventileinheit problemlos unterbringen, weil die Hübe von Biegewandlern in der Regel sehr gering ausfallen. Die Anordnung mit zur Auslenkebene rechtwinkeliger Auslenkebene erleichtert zudem die Montage der Biegewandler in den zugeordneten Aufnahmekammern.

Biegewandler bedürfen zu ihrer Aktivierung in der Regel relativ hoher elektrischer Spannungen. In Verbindung mit der erfindungsgemäßen Unterbringung der Biegewandler unmittelbar im Luftstrom des Druckmediums kann sich ein erhöhtes Kurzschlussrisiko einstellen, das durch die Verwendung getrockneter Luft eliminiert werden kann. Speziell bei mobilen Anwendungen, beispielsweise in Kraftfahrzeugen, ist jedoch meist kein Platz für gesonderte Lufttrockner vorhanden. Hier ist es dann von Vorteil, wenn in einem eingangsseitigen Trocknungsabschnitt des Speisekanals der Ventilbatterie direkt ein zur Entfeuchtung der eingespeisten Druckluft dienendes Trocknungsmittel angeordnet ist. Um eine ausreichende Menge an Trocknungsmittel unterzubringen, kann sich der Trocknungsabschnitt in der Aufreihungsrichtung der Ventileinheiten durch sämtliche Ventileinheiten hindurch erstrecken. Man kann beispielsweise vorsehen, dass die Druckluft über eine erste Anschlussplatte an einem Ende der Ventilbatterie eingespeist wird, dann unter Trocknung zu einer Abschlussplatte am anderen Ende geführt wird, wo sie über einen Umlenkkanal in den von den Aufnahmekammern definierten Längenabschnitt des Speisekanals eingespeist wird.

Durch ein Sichtfenster oder auch elektronisch mittels Fotozelle kann der Sättigungsgrad des Trocknungsmittels überwacht werden, wenn eine solche Art von Trocknungsmittel verwendet wird, bei dem die Feuchtigkeitssättigung einen Farbumschlag auslöst.

Für Diagnosezwecke kann jede Ventileinheit mit einem Druckabfragekanal ausgestattet sein, der eine Erfassung des am Arbeitsanschluss herrschenden Arbeitsdruckes ermöglicht. Das Drucksignal wird zweckmäßigerweise je einem Drucksensor zugeführt, der Bestandteil einer elektronischen Steuereinheit ist, welche an eine Außenfläche der Ventilbatterie angesetzt sein kann, wo sich auch die zu den einzelnen Biegewandlern führenden elektrischen Anschlusskontakte befinden.

Benachbarte Ventileinheiten können durch unmittelbare Ausstattung mit geeigneten Dichtungsstrukturen direkt aneinander angebaut sein. Einfacher lässt sich die Abdichtung in der Regel allerdings durch separate Zwischenplatten realisieren, die zwischen benachbarte Ventileinheiten eingesetzt werden und die dann auch bei Bedarf nutzbar sind, um die zweiten Aufnahmekammern benachbarter Ventileinheiten voneinander getrennt zu halten.

Nachfolgend wird die Erfindung anhand der beiliegenden Zeichnung näher erläutert. In dieser zeigen:
- Figur 1: eine bevorzugte Bauform der erfindungsgemäßen Ventilbatterie in perspektivischer Ansicht mit Blick auf die mit Arbeitsanschlüssen ausgestattete Außenfläche,
- Figur 2: die Ventilbatterie aus Figur 1 mit Blick auf die den Arbeitsanschlüssen entgegengesetzte, mit einer elektronischen Steuereinheit bestückte Außenfläche,
- Figur 3: die Ventilbatterie aus Figur 2 bei abgenommener elektronischer Steuereinheit,
- Figur 4: die Ventilbatterie in einer Explosionsdarstellung, wobei der besseren Übersichtlichkeit wegen nur eine Ventileinheit abgebildet ist,
- Figur 5: eine Einzeldarstellung der aus Figur 4 ersichtli- chen Ventileinheit mit an beiden Anbauflächen je- weils angesetzter Zwischenplatte und mit Blickrich- tung gemäß Pfeil V aus Figur 4,
- Figur 6: die Ventileinheit aus Figur 5 ohne die an der Vorderseite angeordnete Zwischenplatte,
- Figur 7: die Ventileinheit aus Figur 6 ohne die als Biege- wandler ausgebildeten piezoelektrischen Steuerele- mente,
- Figur 8: einen Schnitt durch die Ventileinheit aus Figur 6 gemäß Schnittlinie VIII-VIII, wobei die Biegewand- ler oberhalb der Schnittebene liegen und deshalb nur strichpunktiert angedeutet sind,
- Figur 9: die in Figur 4 abgebildete Ventileinheit in einer Rückansicht mit Blickrichtung gemäß Pfeil IX, wobei die rückseitig angeordnete Zwischenplatte sichtbar ist,
- Figur 10: die Ventileinheit aus Figur 9 ohne die rückseitige Zwischenplatte und
- Figur 11: in einer der Figur 8 entsprechenden Schnittdarstel- lung eine alternative Ausführungsform einer Ventil- einheit.

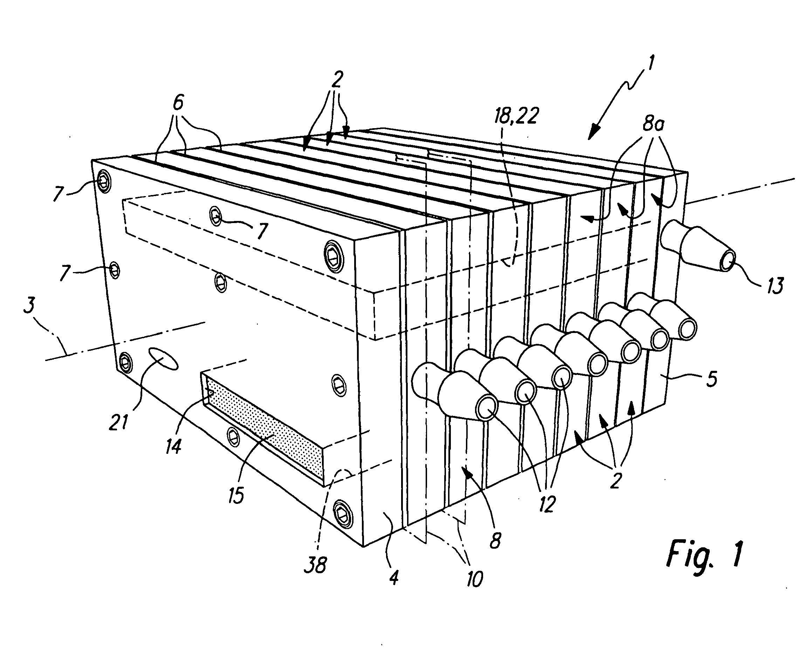

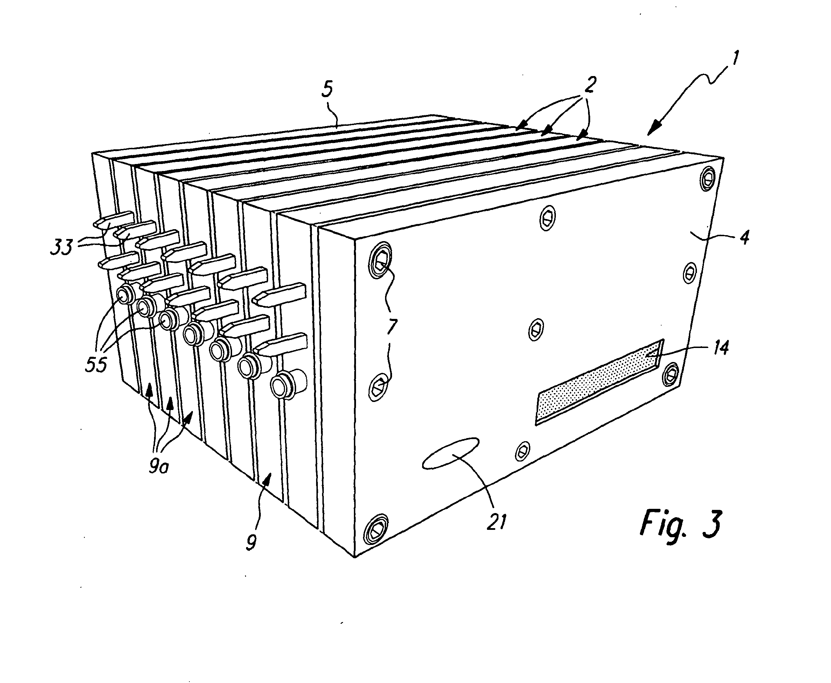

Die in Figuren 1 bis 3 in ihrer Gesamtheit abgebildete Ventilbatterie 1 umfasst mehrere plattenförmig ausgebildete Ventileinheiten 2 - beim Ausführungsbeispiel sieben Stück -, die in einer durch eine strichpunktierte Linie angedeuteten Aufreihungsrichtung 3 aneinandergereiht sind. Jede Ventileinheit 2 besitzt eine durch ihre Plattenebene definierte Hauptausdehnungsebene 10, die rechtwinkelig zu der Aufreihungsrichtung 3 ausgerichtet ist. Die Reihe von Ventileinheiten 2 ist vorne durch eine erste Abschlussplatte 4 und hinten durch eine zweite Abschlussplatte 5 flankiert, deren Außenkonturen denjenigen der Ventileinheiten 2 entsprechen können und deren Hauptausdehnungsebenen auch rechtwinkelig zu der Aufreihungsrichtung 3 verlaufen.

Zwischen unmittelbar benachbarten Ventileinheiten 2 sowie zwischen jeder Abschlussplatte 4, 5 und der sich daran anschließenden Ventileinheit 2 sitzt eine eigenständige Zwischenplatte 6, die dünner ist als die sie flankierenden Komponenten 2, 4, 5 und deren Plattenebene wiederum rechtwinkelig zu der Aufreihungsrichtung 3 ausgerichtet ist.

All diese vorgenannten Komponenten 2, 4, 5, 6 sind durch Verbindungsmittel 7 lösbar zu einer beim Ausführungsbeispiel quaderförmigen selbsttragenden Baugruppe zusammengefasst. Die Verbindungsmittel 7 sind insbesondere so ausgebildet, dass die vorgenannten Komponenten 2, 4, 5, 6 in der Aufreihungsrichtung 3 fest miteinander verspannt werden, um in den Fügebereichen eine dichte Verbindung zu gewährleisten. Exemplarisch sind die Verbindungsmittel 7 als Zuganker ausgebildet, die die beiden Abschlussplatten 4, 5 zueinander ziehen und dadurch die dazwischen angeordneten Ventileinheiten 2 und Zwischenplatten 6 fest verspannen. Andere Arten der Verbindung wären allerdings ebenfalls möglich.

An einer rechtwinkelig zu der Aufreihungsrichtung 3 orientierten ersten Außenfläche 8 der Ventilbatterie 1 befindet sich eine Reihe von in der Aufreihungsrichtung 3 aufeinanderfolgenden Arbeitsanschlüssen 12, an denen nicht weiter dargestellte Fluidleitungen lösbar anschließbar sind, durch die zu betätigende Verbraucher an die Ventilbatterie 1 angeschlossen werden können. Je ein Arbeitsanschluss 12 befindet sich an einer Stirnfläche 8a einer Gehäuseplatte 34 der betreffenden Ventileinheit 2, wobei die Stirnflächen 8a gemeinsam die erste Außenfläche 8 bilden.

Bevorzugt ebenfalls an der ersten Außenfläche 8 ist die in Figur 1 hinten liegende zweite Abschlussplatte 5 mit einem Speiseanschluss 13 versehen, der den Anschluss einer fluidischen Druckquelle ermöglicht, die das für den Betrieb der Ventilbatterie 1 erforderliche fluidische Druckmedium liefert. Die Ventilbatterie 1 des Ausführungsbeispiels ist für einen Betrieb mit Druckluft ausgelegt, könnte aber prinzipiell auch mit anderen Druckmedien betrieben werden.

Die in Figur 1 vorne liegende erste Abschlussplatte 4 ist - insbesondere an ihrer Vorderseite - mit einer Ausströmöffnung 14 versehen, durch die von den Verbrauchern zurückströmende verbrauchte Druckluft an die Atmosphäre abgegeben wird. Um das Ausströmgeräusch zu verringern, kann der Ausströmöffnung 14 ein bevorzugt in die erste Abschlussplatte 4 eingesetzter Druckluft-Schalldämpfer 15 zugeordnet sein.

Jede Ventileinheit 2 ist in der Aufreihungsrichtung 3 von einer fensterartigen Durchbrechung durchsetzt, die eine erste Aufnahmekammer 16 bildet. Die ersten Aufnahmekammern 16 jeweils benachbarter Ventileinheiten 2 fluchten derart miteinander, dass sie gemeinsam einen im Folgenden als Verteilabschnitt 18 bezeichneten Längenabschnitt eines internen Speisekanals 22 der Ventilbatterie 1 bilden. Der Speiseanschluss 13 ist an der zweiten Abschlussplatte 5 an den Speisekanal 22 angeschlossen, sodass dort eingespeiste Druckluft in den Verteilabschnitt 18 und mithin in jede erste Aufnahmekammer 16 der Ventileinheiten 2 gelangt. Es handelt sich hier also um eine zentrale Druckmediumversorgung sämtlicher Ventileinheiten 2.

Der Speisekanal 22 könnte auf den Verteilabschnitt 18 reduziert sein. Zweckmäßigerweise ist dem Verteilabschnitt 18 allerdings stromauf zum Speiseanschluss 13 hin noch ein aufgrund seiner Funktion als Trocknungsabschnitt 19 bezeichneter Kanalabschnitt vorgelagert, bei dessen Durchströmen die eingespeiste Druckluft entfeuchtet wird, sodass die im Verteilabschnitt 18 angelangende Druckluft relativ trocken ist.

Um eine möglichst große Trocknungslänge zu erzielen, verfügt der Trocknungsabschnitt 19 über einen mäanderförmig gestalteten Kanalabschnitt 19a, an den sich ein sämtliche Ventileinheiten parallel zur Aufreihungsrichtung 3 durchziehender linearer Kanalabschnitt 19b anschließt, auf den in der ersten Abschlussplatte 4 ein bevorzugt wiederum mäanderförmig verlaufender Umlenkabschnitt 19c folgt, der in den Verteilabschnitt 18 übergeht, welcher sich zweckmäßigerweise parallel zu dem linearen Kanalabschnitt 19b des Trocknungsabschnittes 19 erstreckt.

Die den Speisekanal 22 durchstromende Luft strömt folglich innerhalb des Verteilabschnittes 18 mit entgegengesetzter Strömungsrichtung wie in dem linearen Kanalabschnitt 19b durch die Ventilbatterie 1 hindurch.

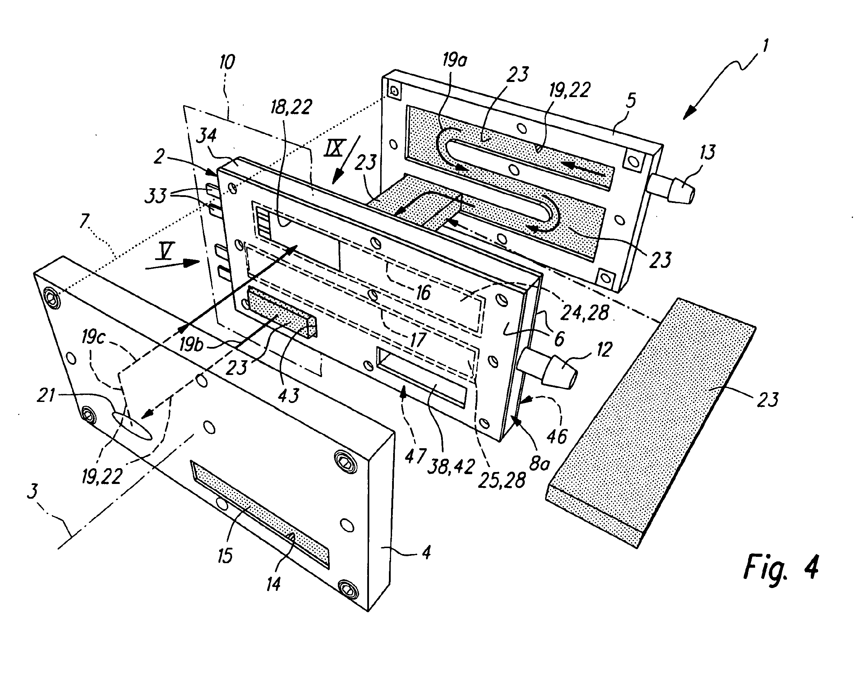

In dem Trocknungsabschnitt 19 ist ein geeignetes Trocknungsmittel 23 angeordnet, beispielsweise von schüttgutartiger Konsistenz und/oder auch mattenförmig zusammenhängend, wie dies am rechten Bildrand der Figur 4 ersichtlich ist. Bei dem Trocknungsmittel 23 handelt es sich beispielsweise um sogenanntes Silica Gel, das die in der eingespeisten Druckluft enthaltene Feuchtigkeit absorbieren und, beispielsweise während Betriebspausen der Ventilbatterie 1, an die Umgebung wieder abgeben kann. Durch ein beispielsweise an der Vorderseite der ersten Abschlussplatte 4 ausgebildetes Sichtfenster 21 hindurch lässt sich bei diesem Trocknungsmittel sehr leicht das Erreichen der Feuchtigungs-Sättigungsgrenze überwachen, da diese mit einem Farbumschlag des Trocknungsmittels 23 einhergeht. Zeigt das Sichtfenster 21 in Richtung einer später noch beschriebenen elektronischen Steuereinheit 67, kann es mit Hilfe eines zu der Steuereinheit 67 gehörenden Photosensors überwacht werden.

Soll die Ventilbatterie 1 mit Druckluft betrieben werden, die eine hohe relative Feuchtigkeit aufweist, wäre es auch denkbar, eine Heizungseinrichtung in dem Trocknungsabschnitt 19 zu installieren, die hin und wieder durch Wärmeentwicklung die in dem Trocknungsmittel 23 gespeicherte Feuchtigkeit verdampfen und entweichen lässt. In diesem Zusammenhang wäre es denkbar, in die Reihe der oben erwähnten plattenförmigen Komponenten 2, 4, 5 eine zusätzliche Feuchtigkeits-Abgabeplatte einzugliedern, durch die während der Phase des Trocknens die ausgedampfte Luft aus der Ventilbatterie 1 entweichen kann.

Schüttgutartiges Trocknungsmittel 23, beispielsweise in Kugelform, kann nach dem Zusammenbau der Ventilbatterie 1 durch den Speiseanschluss 13 in den Speisekanal 22 eingefüllt werden. Ein anschließend noch in den Speiseanschluss 13 installiertes Sieb sowie eine in der ersten Abschlussplatte 4 zwischen dem Trocknungsabschnitt 19 und dem Verteilabschnitt 18 platzierte Siebstruktur können hierbei das Trocknungsmittel innerhalb des Trocknungsabschnittes 19 fixieren und an einem Herausfallen sowie an einem Übertritt in den Verteilabschnitt 18 des Speisekanals 22 hindern.

Die Entfeuchtungsmaßnahmen sind vorteilhaft, weil in jeder ersten Aufnahmekammer 16 der Ventileinheiten 2 ein erstes piezoelektrisches Steuerelement 24 angeordnet ist, das mit einer hohen elektrischen Ansteuerspannung betrieben wird. Die Trocknungsmaßnahmen ermöglichen einen Betrieb der Ventilbatterie 1 ohne Kurzschlussgefahr, auch wenn die über den Speiseanschluss 13 zugeführte Druckluft zuvor keine besonderen Trocknungsmaßnahmen erfahren hat.

Das erste piezoelektrische Steuerelement 24 ist in der Lage, eine in der zugehörigen ersten Aufnahmekammer 16 befindliche erste Kanalmündung 26 je nach Aktivierungszustand freizugeben oder fluiddicht zu verschließen. Als erstes piezoelektrisches Steuerelement 24 ist ein Biegewandler 28 vorgesehen, der streifenartige Gestalt hat und der an seinem rückwärtigen Endabschnitt 32 im Innern der ersten Aufnahmekammer 16 bezüglich der Gehäuseplatte 34 ortsfest fixiert ist. Mit diesem rückwärtigen Endabschnitt 32 sind zwei elektrische Anschlusskontakte 33 verbunden, die an einer der ersten Außenfläche 8 entgegengesetzten zweiten Außenfläche 9 der Ventilbatterie 1 aus der Gehäuseplatte 34 der Ventileinheit 2 herausragen und über die dortigen Stirnflächen 9a der Gehäuseplatten 34 überstehen.

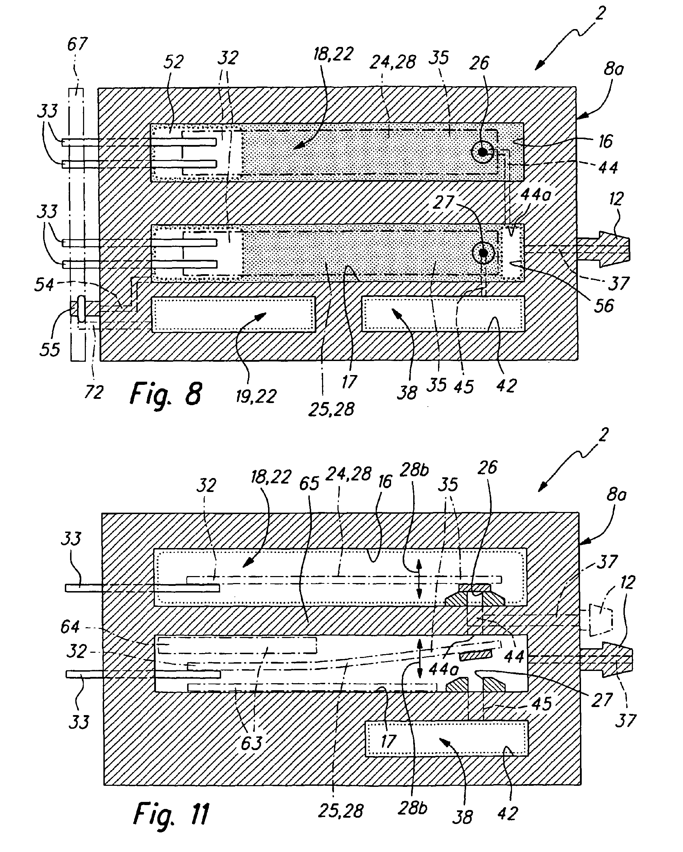

Der vordere Endabschnitt des Biegewandlers 28 bildet einen Steuerabschnitt 35, der über die erste Kanalmündung 26 hinwegragt. Im elektrisch deaktivierten Zustand drückt das in der ersten Aufnahmekammer 16 enthaltene Druckmedium den Steuerabschnitt 35 gegen den die erste Kanalmündung 26 umgrenzenden Ventilsitz und dichtet die erste Kanalmündung 26 ab. Beim Anlegen einer Ansteuerspannung an die elektrischen Anschlusskontakte 33 biegt sich der Biegewandler 28 in einer Auslenkebene durch, wobei sein Steuerabschnitt 35 zur Freigabe der ersten Kanalmündung 26 vom zugeordneten Ventilsitz abhebt. Bei dem Ausführungsbeispiel der Figuren 1 bis 10 ist die Auslenkebene der Biegewandler 28 rechtwinkelig zur Hauptausdehnungsebene der Ventileinheit 2 orientiert, während sie beim Ausführungsbeispiel der Figur 11 parallel zu der Hauptausdehnungsebene 10 verläuft (durch Pfeile 28a, 28b kenntlich gemacht).

Die erste Aufnahmekammer 16 besitzt eine längliche Erstreckung und ist in Verbindung mit einer rechteckigen Gehäuseplatte 34 bevorzugt parallel zu den beiden einander entgegengesetzten Außenflächen 36a, 36b der Gehäuseplatte 34 ausgerichtet, die sich zwischen den beiden Stirnflächen 8a, 9a erstrecken.

Eine ebenfalls Längsgestalt aufweisende zweite Aufnahmekammer 17 ist in der Gehäuseplatte 34 jeder Ventileinheit 2 ausgebildet und verläuft insbesondere parallel zu der ersten Aufnahmekammer 16. In ihr befindet sich ein zweites piezoelektrisches Steuerelement 25, das wie das erste piezoelektrische Steuerelement 24 als Biegewandler 28 ausgebildet ist. An seinem rückwärtigen Endabschnitt 32 ist es mit an der Stirnfläche 9a herausgeführten elektrischen Anschlusskontakten 33 verbunden, und es verfügt außerdem über einen Steuerabschnitt 35, der über eine zweite Kanalmündung 27 hinwegragt, welche sich in der zweiten Aufnahmekammer 17 an der Gehäuseplatte 34 befindet. Durch elektrische Aktivierung kann der Steuerabschnitt 35 des zweiten piezoelektrischen Steuerelementes 35 in einer Auslenkebene ausgelenkt werden, die zu derjenigen des ersten piezoelektrischen Steuerelementes 24 parallel verläuft. Beide Biegewandler 28 sind innerhalb der Ventileinheit 2 mit zueinander paralleler Längserstreckung längsseits nebeneinanderliegend angeordnet und identisch ausgerichtet.

Die zweite Aufnahmekammer 17 steht mit dem Arbeitsanschluss 12 der zugeordneten Ventileinheit 2 in ständiger fluidischer Verbindung. Hierzu mündet ein von dem Arbeitsanschluss 12 ausgehender Arbeitskanal 37 so in die zweite Aufnahmekammer 17 ein, dass die Mündung unabhängig vom Aktivierungszustand des zweiten piezoelektrischen Steuerelementes 25 offen ist.

Im elektrisch deaktivierten Zustand des zweiten piezoelektrischen Steuerelementes 25 wird sein Steuerabschnitt 35 durch den in der zweiten Aufnahmekammer 17 herrschenden Fluiddruck gegen einen die zweite Kanalmündung 27 umgrenzenden Ventilsitz der Gehäuseplatte 34 dicht angedrückt. Die zweite Kanalmündung 27 ist dadurch versperrt. Durch das Anlegen einer Steuerspannung an die zugehörigen elektrischen Anschlusskontakte 33 lässt sich der Steuerabschnitt 35 von der zweiten Kanalmündung 27 abheben, sodass diese mit der zweiten Aufnahmekammer 17 frei verbunden ist.

Sämtliche Ventileinheiten 2 sind in der Aufreihungsrichtung 3 von einem gemeinsam zugeordneten internen Abführkanal 38 der Ventilbatterie 1 durchsetzt. Er erstreckt sich zweckmäßigerweise parallel zu dem Verteilabschnitt 18 und dem gegebenenfalls vorhandenen Trocknungsabschnitt 19 des Speisekanals 22. An seinem rückwärtigen Endbereich ist er durch die zweite Abschlussplatte 5 verschlossen. Sein vorderer Endbereich steht über die Ausströmöffnung 14 mit der Atmosphäre in Verbindung.

Gebildet ist der Abführkanal 38 von miteinander fluchtenden Durchtrittsöffnungen 42 in den Grundplatten 34 der einzelnen ventileinheiten 2, die sich zu dem Abführkanal 38 ergänzen. In gleicher Weise ist im Übrigen auch der Trocknungsabschnitt 19 von miteinander fluchtenden Durchtrittsöffnungen 43 der aneinander angesetzten Ventileinheiten 2 gebildet.

Das Ausführungsbeispiel der Figur 11 macht deutlich, dass auf einen Trocknungsabschnitt 19 auch verzichtet werden kann, wenn von vorneherein eine Versorgung der Ventilbatterie 1 mit relativ trockener Luft gewährleistet ist. Hier strömt das eingespeiste Druckmedium aus dem Speiseanschluss 12 direkt in einen Verteilabschnitt des Speisekanals 22.

Indem sich die Biegewandler 28 in der sie aufnehmenden ersten beziehungsweise zweiten Aufnahmekammer 16, 17 quer zu der Aufreihungsrichtung 3 erstrecken, können die ventileinheiten 2 in der Aufreihungsrichtung 3 relativ schmal ausgebildet werden.

Innerhalb jeder Ventileinheit 2 geht von der ersten Kanalmündung 26 ein erster Verbindungskanal 44 ab, der andernends frei in die zweite Aufnahmekammer 17 einmündet (freie Mündungen 44a). Ein von der zweiten Kanalmündung 27 ausgehender zweiter Verbindungskanal 45 mündet frei in die zum Abführkanal 38 gehörende Durchtrittsöffnung 42. Während sämtliche ersten Aufnahmekammern 16 zur Bildung des Speisekanals 22 untereinander in ständiger Fluidverbindung stehen, sind die zweiten Aufnahmekammern 17 der Ventileinheiten 2 fluidisch voneinander getrennt und kommunizieren lediglich mit den beiden Verbindungskanälen 44, 45 sowie dem Arbeitskanal 37 der zugeordneten Ventileinheit 2.

Über die elektrischen Anschlusskontakte 33 können die beiden als Biegewandler 28 ausgebildeten, zweckmäßigerweise in einer gemeinsamen Ebene quer zur Aufreihungsrichtung 3 nebeneinander angeordneten piezoelektrischen Steuerelemente 24, 25 getrennt voneinander angesteuert werden. Dadurch lässt sich die Ventileinheit beispielsweise als 3/3-Wege-Proportionalventil betreiben. Bei in Schließstellung befindlichem zweiten piezoelektrischen Steuerelement 25 lässt sich durch proportionale Ansteuerung des ersten piezoelektrischen Steuerelementes 24 die erste Kanalmündung 26 mit variablem Querschnitt freigeben, um über den ersten Verbindungskanal 44, die zweite Aufnahmekammer 17 und den Arbeitskanal 37 hinweg den Arbeitsanschluss 12 mit variabler Durchflussrate mit Druckmedium zu versorgen. Hierbei ist die Verbindung zu der Durchtrittsöffnung 42 des Abfuhrkanals 38 durch das zweite piezoelektrische Steuerelement 25 abgesperrt.

Zum anschließenden Entlüften eines angeschlossenen Verbrauchers wird das erste piezoelektrische Steuerelement 24 deaktiviert, sodass es von dem in der ersten Aufnahmekammer 16 herrschenden Speisedruck in die die erste Kanalmündung 26 absperrende Schließstellung gedrückt wird. Gleichzeitig oder anschließend wird das zweite piezoelektrische Steuerelement 25 aktiviert, sodass es von der zweiten Kanalmündung 27 abhebt und das aus dem Arbeitsanschluss 12 zurückströmende Druckmedium über den Arbeitskanal 37, die zweite Aufnahmekammer 17, den zweiten Verbindungskanal 45 und den Abführkanal 38 zur Umgebung abgeführt wird.

Selbstverständlich lassen sich die beiden piezoelektrischen Steuerelemente 24, 25 auch derart aufeinander abgestimmt betreiben, dass sich eine 3/2-Schaltfunktion ergibt.

Die elektrischen Anschlusskontakte 33 können innerhalb der Aufnahmekammern 16, 17 federnd ausgebildet sein, um allein durch Berührkontakt den elektrischen Anschluss der Biegewandler 28 durchzuführen und zugleich die ortsfeste einseitige Fixierung der Biegewandler zu bewirken. Hierbei ist eine dahingehende Auslegung möglich, dass die Biegewandler 28 mit ihren Steuerabschnitten 35 im deaktivierten Zustand bei druckloser Ventilbatterie 1 nur leicht an die Ventilsitze der Kanalmündungen 26, 27 angedrückt werden.

Die piezoelektrischen Biegewandler 28 sind im spannungslosen Zustand langgestreckt und können auf einer etwa in der Längsmitte der Aufnahmekammer 16, 17 angeordneten Auflage 29 sowie an den die Kanalmündungen 26, 27 umgrenzenden Ventilsitzen anliegen, wobei jeder Biegewandler 28 direkt über der Kanalmündung 26, 27 zweckmäßigerweise ein aus Material mit gummielastischen Eigenschaften bestehendes Dichtelement trägt. Hier fungieren die Biegewandler 28 dann unmittelbar als Ventilglieder. Abweichend hiervon ist auch eine Gestaltung möglich, bei der zusätzlich zu den Biegewandlern 28 gesonderte Ventilglieder vorhanden sind, die mit den oben erwähnten Kanalmündungen 26, 27 kooperieren und die von den Biegewandlern 28 betätigt werden.

Zusätzliche Federmittel zur Aufrechterhaltung der Schließstellung der beiden Biegewandler 28 sind nicht erforderlich, weil die Steuerabschnitte 35 durch den in der jeweiligen Aufnahmekammer 16, 17 herrschenden Fluiddruck selbsttätig in die Schließstellung gedrückt werden. Durch das Fehlen einer Schließfeder steht die maximal erzielbare Kraft des Biegewandlers für den Öffnungsvorgang zur Verfügung. Ist eine Kanalmündung 26, 27 durch Aktivierung des zugeordneten Biegewandlers 28 ein Stück weit geöffnet, sinkt die durch das Druckmedium hervorgerufene Schließkraft sehr schnell, sodass sich der Biegewandler zur Erzielung des maximalen Hubes sehr stark krümmen kann, ohne einen Bruch zu riskieren. Die Figur 11 zeigt den in der ersten Aufnahmekammer 16 angeordneten Biegewandler 28 in einer Schließstellung und den in der zweiten Aufnahmekammer 17 angeordneten Biegewandler 28 in seiner maximalen Offenstellung.

Beim Ausführungsbeispiel der Figuren 1 bis 10 sind die beiden Biegewandler 28 so parallel nebeneinander angeordnet, dass ihre zur Auslenkebene 28a rechtwinkeligen Ausdehnungsebenen parallel zueinander verlaufen und insbesondere zusammenfallen. Sie sind dabei parallel zur Hauptausdehnungsebene der zugeordneten Ventileinheit 2 angeordnet. Das Auslenken der Biegewandler 28 bei ihrer Aktivierung erfolgt also praktisch in der Aufreihungsrichtung 3.

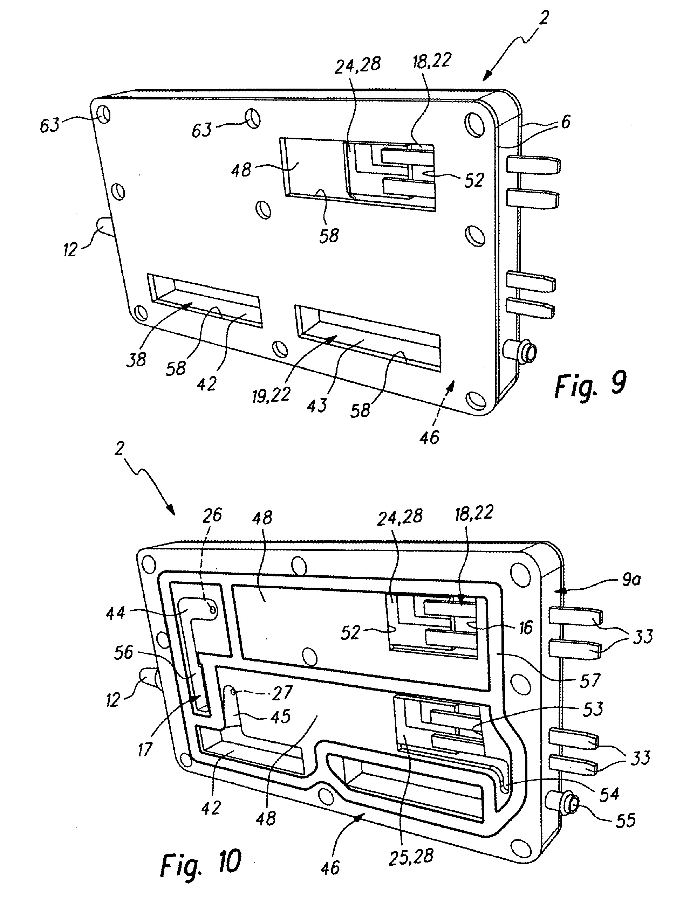

Die beiden Kanalmündungen 26, 27 sind in diesem Fall so in der zugeordneten Aufnahmekammer 16, 17 angeordnet, dass sie in der Aufreihungsrichtung 3 orientiert sind. Um dies zu ermöglichen, ist jede Aufnahmekammer 16, 17 im Bereich einer der beiden in der Aufreihungsrichtung 3 orientierten ersten und zweiten Anbauflächen 46, 47 der Gehäuseplatte 34 zumindest teilweise von einem mit der Gehäuseplatte 34 bevorzugt einstückigen Kammerboden 48 begrenzt, in dem die zugeordnete Kanalmündung 26, 27 ausgebildet ist. Vorzugsweise sind beide Kammerböden 48 im Bereich ein und derselben ersten Anbaufläche 46 vorgesehen, mit der sie gemäß Figur 10 vorzugsweise fluchten.

Der Kammerboden 48 der ersten Aufnahmekammer 16 erstreckt sich über nur einen Teil des quer zur Aufreihungsrichtung 3 gemessenen Querschnittes dieser ersten Aufnahmekammer 16, sodass eine Durchtrittsöffnung 52 frei bleibt, die die durchgängige Verbindung aller ersten Aufnahmekammern 16 zur Bildung des Verteilabschnittes 18 des Speisekanals 22 gewährleistet.

Der Kammerboden 48 der zweiten Aufnahmekammer 17 kann den Querschnitt dieser zweiten Aufnahmekammer 17 komplett verschließen und dadurch unmittelbar eine fluiddichte Abtrennung zur darauffolgenden Ventileinheit 2 bewirken. Exemplarisch ist aber auch der Kammerboden 48 der zweiten Aufnahmekammer 17 mit einer Durchtrittsöffnung 53 versehen, die zum einen die Montage des zweiten piezoelektrischen Steuerelementes 25 erleichtert und die zum anderen vorgesehen ist, um eine leichtere Verbindung mit einem noch zu erläuternden Druckabgriffskanal 54 zu ermöglichen. Bei zusammengebauter Ventilbatterie 1 ist die Durchtrittsöffnung 53 durch eine sich gemäß Figur 9 anschließende Zwischenplatte 6 verschlossen.

Der Druckabgriffskanal 54 ermöglicht eine Erfassung des am Arbeitsanschluss 12 herrschenden Druckes durch Abgreifen des in der zweiten Aufnahmekammer 17 anstehenden Fluiddruckes.

Bevorzugt an der gleichen Stirnfläche 9a der Gehäuseplatte 34, an der auch die elektrischen Anschlusskontakte 33 herausragen, verfügt jede Ventileinheit 2 über einen zum Beispiel als Anschlussstutzen ausgebildeten Druckabgriffsanschluss 55, der über den erwähnten Druckabgriffskanal 54 mit der zweiten Aufnahmekammer 17 verbunden ist. Gemäß Figur 10 kann zumindest ein Längenabschnitt des Druckabgriffskanals 54 als in die erste Anbaufläche 46 eingebrachte nutartige Vertiefung ausgeführt sein, die in die Durchtrittsöffnung 53 mündet und von der angesetzten Zwischenplatte 6 ebenfalls dicht abgedeckt wird.

Aus Figur 10 ist auch ersichtlich, wie die oben erwähnten Verbindungskanäle 44, 45 als nutartige Vertiefungen in die erste Anbaufläche 46 eingebracht sind und sich dort auch teils über die Außenfläche der Kammerböden 48 hinweg erstrecken. Durch die angesetzte Zwischenplatte 6 sind die nutartigen Vertiefungen abgedeckt und bilden auf diese Weise die von der darauffolgenden Ventileinheit 2 abgetrennten ersten und zweiten Verbindungskanäle 44, 45. Die Verbindung des ersten Verbindungskanals 44 mit der zweiten Aufnahmekammer 17 erfolgt über einen von der Zwischenplatte 6 ebenfalls abdeckten Durchbruch 56 der Gehäuseplatte 34.

Die von der darauffolgenden Ventileinheit 2 abzutrennenden Öffnungen in einer Gehäuseplatte 34 können sowohl durch eine entsprechend gestaltete Zwischenplatte 6 als auch - alternativ oder ergänzend - unmittelbar durch Bestandteile der darauffolgenden Ventileinheit 2 abgedeckt werden.

Bei dem Ausführungsbeispiel der Figur 11 sind die beiden Biegewandler 28 so orientiert, dass ihre Auslenkung 28b in der Hauptausdehnungsebene der zugeordneten Ventileinheit 2 stattfindet. Die Ausdehnungsebene der streifenförmigen Biegewandler verläuft also rechtwinkelig zur Hauptausdehnungsebene der Ventileinheiten 2. Folglich sind hier die zu steuernden Kanalmündungen 26, 27 rechtwinkelig zur Aufreihungsrichtung 3 orientiert und an einer die betreffende Aufnahmekammer 16, 17 umfangsseitig begrenzenden Wand der Gehäuseplatte 34 ausgebildet. Zweckmäßigerweise weisen beide Kanalmündungen 26, 27 in die gleiche Richtung.

Bei dieser Ausführungsform erübrigt sich ein partieller Verschluss der ersten Aufnahmekammer 16 durch einen Kammerboden 48, sodass höhere Durchflussraten möglich sind.

Zur Gewährleistung der gewünschten Funktion sind die Ventileinheiten 2 unter Abdichtung aneinander angebaut. Hierzu trägt jede Ventileinheit 2 an beiden Anbauflächen 46, 47 ihrer Gehäuseplatte 34 eine Dichtungsstruktur 57, die die diversen Kammern, Durchbrüche und Kanäle so umschließt, dass die voneinander getrennt zu haltenden Abschnitte in voneinander getrennten Feldern der Dichtungsstruktur 57 liegen. Man kann hier praktisch von einer Dichtungsmaske sprechen. Die Dichtungsstruktur 57 kann eine zusammenhängende Struktur sein oder sich aus einzelnen rahmen- oder ringförmigen Dichtungen zusammensetzen. Die Dichtungsstruktur 57 kann gesondert von der Grundplatte 34 ausgebildet und in Nuten der Anbauflächen 46, 47 eingelegt sein. Besonders zweckmäßig ist es, wenn die Dichtungsstruktur 57 mit der Gehäuseplatte 34 stoffschlüssig verbunden ist, beispielsweise durch Spritzgießen in einem Mehrkomponenten-Spritzgießverfahren oder auch durch Anvulkanisieren.

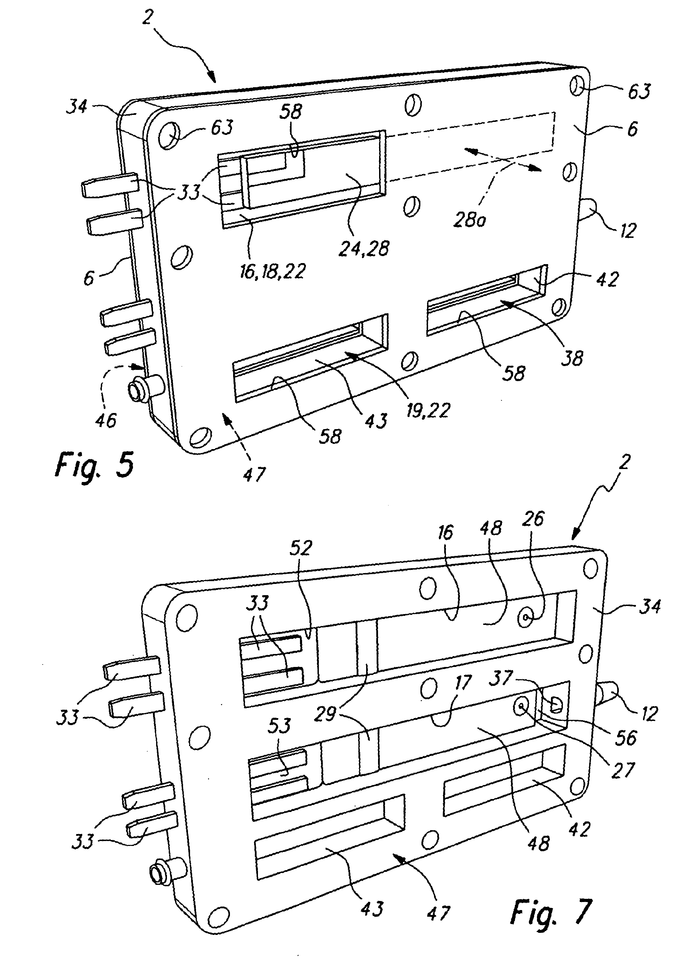

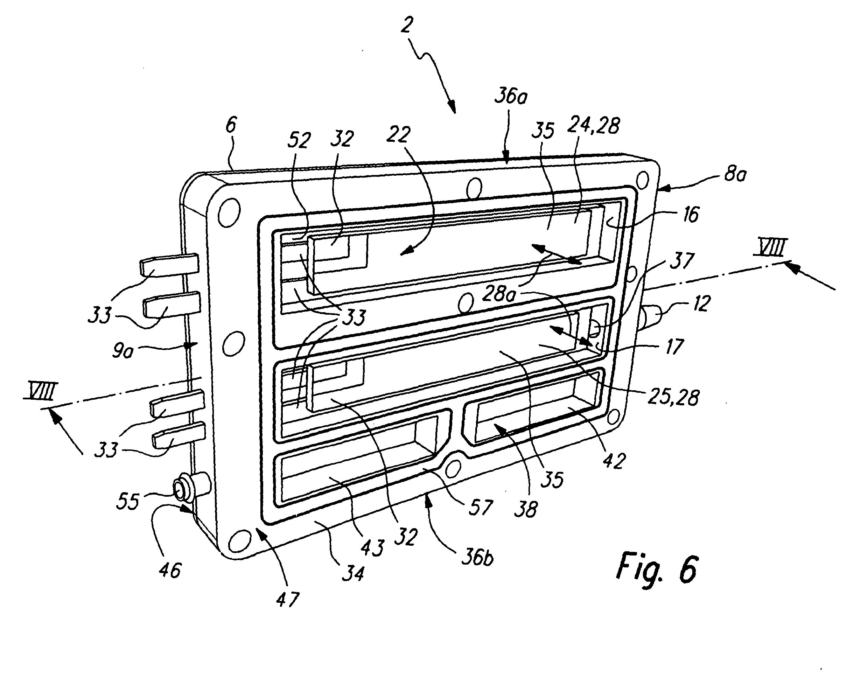

Die Figuren 6 und 10 zeigen die beiden mit je einer Dichtungsstruktur 57 versehenen ersten und zweiten Anbauflächen 46, 47 der Gehäuseplatte 34 einer Ventileinheit 2. Die Figur 7 ist ein Blick auf die zweite Anbaufläche 47 ohne daran angebrachte Dichtungsstruktur 57.

Die Dichtungsstrukturen 57 der einander zugewandten ersten und zweiten Anbauflächen 46, 47 unmittelbar aufeinanderfolgender ventileinheiten 2 liegen unter Abdichtung an den einander entgegengesetzten Plattenflächen der jeweils dazwischen angeordneten Zwischenplatte 6 an. Die Figuren 5 und 9 zeigen eine Ventileinheit 2 aus entgegengesetzten Blickwinkeln mit diesseits und jenseits angesetzter Zwischenplatte 6, die die mit ihr zusammenwirkende Dichtungsstruktur 57 verdecken.

Jede Zwischenplatte 6 ist mit mehreren sie rechtwinkelig zur Plattenebene durchsetzenden Durchbrüchen 58 versehen, die die fluidische verknüpfung der ersten Aufnahmekammern 16 sowie der Durchtrittsöffnungen 42, 43 benachbarter Ventileinheiten 2 bewirken, um den Verteilabschnitt 18 des Speisekanals 22, den Abführkanal 38 und - gegebenenfalls - den Trocknungsabschnitt 19 des Speisekanals 22 zu bilden. Daneben sind noch Durchbrechungen 63 für die Verbindungsmittel 7 vorhanden. Ansonsten sind die Zwischenplatten 6 durchbrechungslos ausgebildet.

Die oben genannten Dichtungsstrukturen 57 können auch an der Zwischenplatte 6 angebracht sein.

Es versteht sich, dass bei entsprechender Gestaltung der Gehäuseplatten 34 auch eine gegenseitige Abdichtung aufeinanderfolgender Ventileinheiten 2 ohne Zwischenplatte 6 möglich ist.

Die vorgenannten Ausführungen hinsichtlich der Abdichtung gelten auf für die abgedichtete Verbindung zwischen den äußeren Ventileinheiten 2 und den sich daran anschließenden Abschlussplatten 4, 5.

Es können bei Bedarf Fixiermittel vorhanden sein, die eine lagerichtige Fixierung der Zwischenplatten 6 quer zur Aufreihungsrichtung 3 an den zugeordneten Ventileinheiten 2 ermöglichen. Beispielsweise können an der Zwischenplatte 6 Vorsprünge 63 vorhanden sein, die unter Bewirkung einer Querabstützung in eine Aufnahmekammer 16, 17 und/oder in eine Durchtrittsöffnung 42, 43 eingreifen.

Bei Bedarf kann die Zwischenplatte 6 an wenigstens einer ihrer Plattenflächen einen oder mehrere in Figur 11 strichpunktiert angedeutete Vorsprünge 63 aufweisen, die im montierten Zustand in die mit dem Arbeitsanschluss 12 kommunizierende zweite Aufnahmekammer 17 eintauchen. Sie verringern das Kammervolumen und verkürzen dadurch die pneumatische Schaltzeit. Mindestens ein solcher Vorsprung 63 kann auch als Abstützmittel 64 für die sich zwischen den beiden Aufnahmekammern 16, 17 erstreckende Trennwand 65 der Gehäuseplatte 34 fungieren, um zu verhindern, dass sich die Trennwand 65 aufgrund des in der ersten Aufnahmekammer 16 herrschenden Speisedruckes verformt.

In Figur 11 ist auch noch strichpunktiert angedeutet, dass der Arbeitsanschluss 12 über einen Arbeitskanal 37 direkt zu der ersten Kanalmündung 26 führen könnte, um die Ventileinheit 2 als 2/2-Wegeventil zu betreiben. In diesem Fall könnte die zweite Aufnahmekammer 17 mit dem zweiten piezoelektrischen Steuerelement 25 entfallen. Auch der Abführkanal 38 würde sich dann erübrigen.

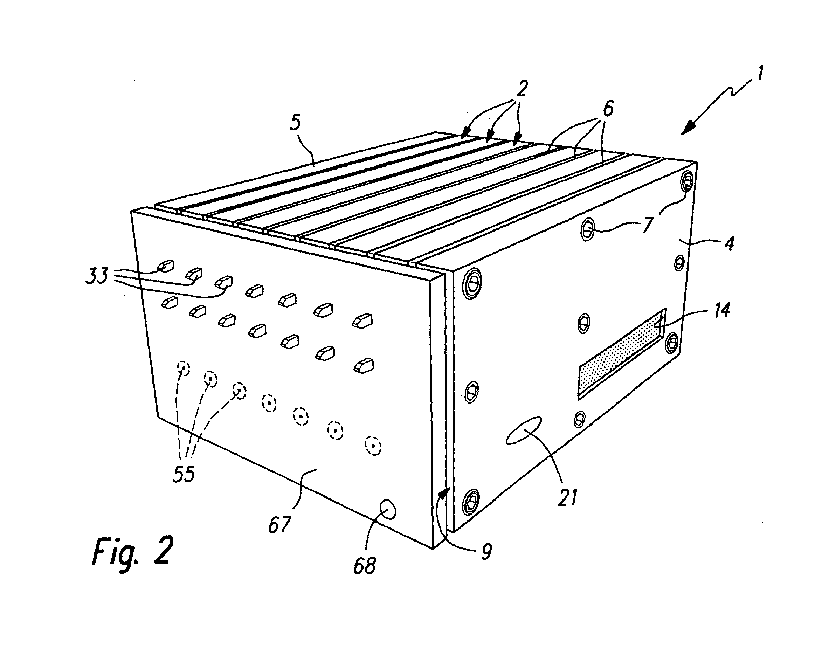

Gemäß Figur 2 kann die Ventilbatterie 1 an der zweiten Außenfläche 9 mit einer bevorzugt mit einer oder mehreren Platinen aufgebauten elektronischen Steuereinheit 67 bestückt sein. Sie hat zweckmäßigerweise eine plattenartige, flache Gestalt mit zu der zweiten Außenfläche 9 paralleler Hauptausdehnungsebene. Sie kann insbesondere angesteckt sein, wobei durch Steckverbindungen die Kontaktierung der elektrischen Anschlusskontakte 33 erfolgt. Eine elektrische Schnittstelle 68 ermöglicht die Kommunikation mit einer externen Steuerelektronik, insbesondere über einen hier anschließbaren Bus.

Die elektronische Steuereinheit 67 steht auch mit den Druckabgriffsanschlüssen 55 in Verbindung und enthält nicht weiter abgebildete Drucksensoren für die schon erwähnte Druckerfassung des Arbeitsdruckes.

Ferner kann die elektronische Steuereinheit 67 mit Detektionsmitteln zur Detektion des Feuchtigkeitsgrades des gegebenenfalls vorhandenen Trocknungsmittels 23 ausgestattet sein. Gemäß Figur 8 kann es sich hierbei um eine von einer Platine der elektronischen Steuereinheit 67 getragene Fotozelle 72 handeln, die auf den Farbumschlag des Trocknungsmittels 23 anspricht.

Zweckmäßigerweise ist die Anordnung so getroffen, dass beim Anbau der elektronischen Steuereinheit 67 gleichzeitig und selbsttätig die elektrischen Anschlusskontakte 33 wie auch die Druckabgriffsanschlüsse 55 angeschlossen werden.

## Patentansprüche

1. Ventilbatterie, mit mehreren in einer Aufreihungsrichtung (3) rechtwinkelig zu ihren Hauptausdehnungsebenen (10) aneinandergereihten plattenförmigen Ventileinheiten (2), die jeweils mindestens ein in einer die Ventileinheit (2) in der Aufreihungsrichtung (3) durchsetzenden ersten Aufnahmekammer (16) angeordnetes erstes piezoelektrisches Steuerelement (24) enthalten, durch das die fluidische Verbindung zwischen einem der betreffenden Ventileinheit (2) individuell zugeordneten Arbeitsanschluss (12) und einem sämtlichen Ventileinheiten (2) gemeinsam zugeordneten internen Speisekanal (22) der Ventilbatterie steuerbar ist, **dadurch gekennzeichnet, dass** der Speisekanal (22) einen sämtliche Ventileinheiten (2) in der Aufreihungsrichtung (3) durchsetzenden Längenabschnitt (18) aufweist, der von den miteinander in Verbindung stehenden ersten Aufnahmekammern (16) der unter Abdichtung aneinandergesetzten Ventileinheiten (2) gebildet ist, wobei sich in den ersten Aufnahmekammern (16) jeweils eine mit dem Arbeitsanschluss (12) der Ventileinheit (2) verbundene erste Kanalmündung (26) befindet und wobei die piezoelektrischen Steuerelemente (24) als sich in den ersten Aufnahmekammern (16) quer zu der Aufreihungsrichtung (3) erstreckende Biegewandler (28) ausgeführt sind, die abhängig von ihrem Aktivierungszustand die in der ersten Aufnahmekammer (16) angeordnete erste Kanalmündung (26) wahlweise freigeben oder verschließen können.

2. Ventilbatterie nach Anspruch 1, **dadurch gekennzeichnet, dass** sämtliche Ventileinheiten (2) in der Aufreihungsrichtung (3) von einem gemeinsam zugeordneten internen Abführkanal (38) der Ventilbatterie durchsetzt sind, über den das von den Arbeitsanschlüssen (12) zurückströmende Druckmedium aus der Ventilbatterie (1) abführbar ist.

3. Ventilbatterie nach Anspruch 2, **dadurch gekennzeichnet, dass** in jeder Ventileinheit (2) eine ständig mit dem zugeordneten Arbeitsanschluss (12) verbundene zweite Aufnahmekammer (17) ausgebildet ist, von der ein zu der ersten Kanalmündung (26) in der ersten Aufnahmekammer (16) führender erster Verbindungskanal (44) abgeht und in der mindestens ein als sich quer zu der Aufreihungsrichtung (3) erstreckender Biegewandler (28) ausgebildetes zweites piezoelektrisches Steuerelement (25) angeordnet ist, das abhängig von seinem Aktivierungszustand eine in der zweiten Aufnahmekammer (17) befindliche zweite Kanalmündung (27) eines mit dem Abführkanal (38) verbundenen zweiten Verbindungskanals (45) der Ventileinheit (2) wahlweise freigeben oder verschließen kann, wobei die beiden piezoelektrischen Steuerelemente (24, 25) zweckmäßigerweise unabhängig voneinander elektrisch ansteuerbar sind.

4. Ventilbatterie nach Anspruch 3, **dadurch gekennzeichnet, dass** wenigstens einer der Verbindungskanäle (44, 45) zumindest teilweise von einer nutartigen Vertiefung gebildet ist, die sich in einer der beiden in der Aufreihungsrichtung (3) orientierten Anbauflächen (46, 47) der Ventileinheit (2) erstreckt und von der dort angesetzten nächsten Ventileinheit (2) oder einer Zwischenplatte (6) abgedeckt ist.

5. Ventilbatterie nach Anspruch 3 oder 4, **dadurch gekennzeichnet, dass** die beiden Biegewandler (28) innerhalb der Ventileinheit (2) mit zueinander paralleler Längserstreckung längsseits nebeneinanderliegend angeordnet sind.

6. Ventilbatterie nach einem der Ansprüche 3 bis 5, **dadurch gekennzeichnet, dass** die zweite Aufnahmekammer (17) an wenigstens einer ihrer beiden in der Äufreihungsrichtung (3) orientierten Seiten offen und durch die darauffolgende Ventileinheit (2) oder eine Zwischenplatte (6) abgedeckt ist.

7. Ventilbatterie nach einem der Ansprüche 1 bis 6, **dadurch gekennzeichnet, dass** der mindestens eine Biegewandler (28) so in der Ventileinheit (2) angeordnet ist, dass seine Auslenkebene parallel zur Hauptausdehnungsebene (10) der Ventileinheit (2) verläuft.

8. Ventilbatterie nach einem der Ansprüche 1 bis 6, **dadurch gekennzeichnet, dass** der mindestens eine Biegewandler (28) so in der Ventileinheit (2) angeordnet ist, dass seine Auslenkebene rechtwinkelig zur Hauptausdehnungsebene (10) der Ventileinheit (2) verläuft, wobei die von den Biegewandlern (28) wahlweise freigebbaren oder verschließbaren Kanalmündungen (26, 27) zweckmäßigerweise in der Aufreihungsrichtung (3) der Ventileinheiten (2) orientiert sind.

9. Ventilbatterie nach einem der Ansprüche 1 bis 8, **dadurch gekennzeichnet, dass** in einem stromauf des von den ersten Aufnahmekammern (16) gebildeten Längenabschnittes (18) des Speisekanals (22) angeordneten Trocknungsabschnitt (19) des Speisekanals (22) ein zur Entfeuchtung der eingespeisten Druckluft dienendes Trocknungsmittel (23) angeordnet ist, wobei sich zweckmäßigerweise der Trocknungsabschnitt (19) des Speisekanals (22) in der Aufreihungsrichtung (3) durch sämtliche Ventileinheiten (2) hindurch erstreckt.

10. Ventilbatterie nach Anspruch 9, **dadurch gekennzeichnet, dass** die Reihe von Ventileinheiten (2) diesseits und jenseits von je einer Abschlussplatte (4, 5) flankiert ist, wobei die eine Abschlussplatte (5) einen mit dem Trocknungsabschnitt (19) des Speisekanals (22) verbundenen Speiseanschluss (13) aufweist und die andere Abschlussplatte (4) den Trocknungsabschnitt (19) zu dem von den ersten Aufnahmekammern (16) gebildeten Längenabschnitt (18) des Speisekanals (22) umlenkt.

11. Ventilbatterie nach Anspruch 9 oder 10, **gekennzeichnet durch** ein Sichtfenster (21) zur Sichtbarmachung eines bei Feuchtigkeitssättigung auftretenden Farbumschlages des Trocknungsmittels (23).

12. Ventilbatterie nach einem der Ansprüche 9 bis 11, **gekennzeichnet durch** eine Fotozelle (72) zur Detektion eines bei Feuchtigkeitssättigung auftretenden Farbumschlages des Trocknungsmittels (23).

13. Ventilbatterie nach einem der Ansprüche 1 bis 12, **dadurch gekennzeichnet, dass** jede Ventileinheit (2) mit einem zur Erfassung des am Arbeitsanschluss (12) abgreifbaren Arbeitsdruckes dienenden Druckabgriffskanal (54) ausgestattet ist.

14. Ventilbatterie nach einem der Ansprüche 1 bis 13, **dadurch gekennzeichnet, dass** mit den Biegewandlern (28) elektrische Anschlusskontakte (33) verbunden sind, die an einer gemeinsamen, sich in der Aufreihungsrichtung (3) erstreckenden Außenfläche (9) der Ventilbatterie (1) für Anschlussmaßnahmen zugänglich sind, wobei an die Anschlusskontakte (33) zweckmäßigerweise eine elektronische Steuereinheit (67) angesetzt ist, die zweckmäßigerweise mindestens eine Platine aufweist, deren Hauptausdehnungsebene parallel zu der von den Ventileinheiten (2) definierten Außenfläche (9) der Ventilbatterie (1) ausgerichtet ist, an der sich die Anschlusskontakte (33) befinden.

15. Ventilbatterie nach einem der Ansprüche 1 bis 14, **dadurch gekennzeichnet, dass** zwischen benachbarten Ventileinheiten (2) eine an der gegenseitigen Abdichtung der Ventileinheiten (2) mitwirkende Zwischenplatte (6) angeordnet ist, die über Durchbrüche (58) für die fluidische Verbindung benachbarter Ventileinheiten (2) verfügt, wobei zweckmäßigerweise die Ventileinheiten (2) an ihren einander zugewandten Anbauflächen (46, 47) jeweils eine mit der dazwischen angeordneten Zwischenplatte (6) dichtend zusammenwirkende Dichtungsstruktur (57) aufweisen.

## Claims

1. Valve bank, comprising a plurality of plate-shaped valve units (2) lined up in a line-up direction (3) which is perpendicular to their main dimensional planes, which valve units contain at least one piezoelectric control element (24) located in a first receiving chamber (16) passing through the valve unit (2) in the line-up direction (3), by means of which control element the fluidic connection between an operating port (12) individually assigned to the respective valve unit (2) and an internal supply passage (22) of the valve bank which is common to all of the valve units (2) can be controlled, **characterised in that** the supply passage (22) comprises a linear section (18) passing through all of the valve units (2) in the line-up direction (3) and represented by the mutually connected first receiving chambers (16) of the valve units (2) assembled in a sealed arrangement, wherein a first passage orifice (26) connected to the operating port (12) of the valve unit (2) is provided in each of the first receiving chambers (16) and wherein the piezoelectric control elements (24) are designed as bending transducers (28) extending in the first receiving chambers (16) at right angles to the line-up direction (3), which bending transducers are capable of optionally releasing or blocking the first passage orifice (26) in the first receiving chamber (16) in dependence on their activation state.

2. Valve bank according to claim 1, **characterised in that** a discharge passage (38) of the valve bank, via which the pressure fluid returning from the operating ports (12) can be discharged from the valve bank (1) and which is common to all of the valve units, passes through all of the valve units (2) in the line-up direction (3).

3. Valve bank according to claim 2, **characterised in that** in each valve unit (2) is formed a second receiving chamber (17) permanently connected to the associated operating port (12), from which second receiving chamber extends a first connecting passage (44) leading to the first passage orifice (26) in the first receiving chamber (16) and in which second receiving chamber is provided at least one second piezoelectric control element (25) designed as a bending transducer (28) extending at right angles to the line-up direction (3), which control element is capable or releasing or blocking a second passage orifice (27) of a second connecting passage (45) of the valve unit (2), which second passage orifice is located in the second receiving chamber (17), in dependence on its activation state, wherein the two piezoelectric control elements (24, 25) are expediently selectable electrically independently of each other.

4. Valve bank according to claim 3, **characterised in that** at least one of the connecting passages (44, 45) is at least partially represented by a groove-like recess which extends in one of the two mounting surfaces (46, 47) of the valve unit (2) oriented in the line-up direction (3) and which is covered by the next valve unit (2) mounted there or by an interconnecting plate (6).

5. Valve bank according to claim 3 or 4, **characterised in that** the two bending transducers (28) are arranged within the valve unit (2) to lie adjacent to each other with parallel longitudinal dimensions.

6. Valve bank according to any of claims 3 to 5, **characterised in that** the second receiving chamber (17) is open on at least one of its two sides oriented in the line-up direction (3) and covered by the next valve unit (2) or by an interconnecting plate (6).

7. Valve bank according to any of claims 1 to 6, **characterised in that** the at least one bending transducer (28) is arranged in the valve unit (2) in such a way that its plane of deflection extends parallel to the main dimensional plane (10) of the valve unit (2).

8. Valve bank according to any of claims 1 to 6, **characterised in that** the at least one bending transducer (28) is arranged in the valve unit (2) in such a way that its plane of deflection extends at right angles to the main dimensional plane (10) of the valve unit (2), wherein the passage orifices (26, 27) which are optionally released or blocked by the bending transducers (28) are expediently oriented in the line-up direction (3) of the valve units (2).

9. Valve bank according to any of claims 1 to 8, **characterised in that** in a drying section (19) of the supply passage (22), which is provided upstream of the linear section (18) of the supply passage (22) represented by the first receiving chambers (16), there is provided a desiccant (23) for dehumidifying the supplied compressed air, wherein the drying section (19) of the supply passage (22) expediently extends in the line-up direction (3) through all of the valve units (2).

10. Valve bank according to claim 9, **characterised in that** the row of valve units (2) is flanked on the near side and on the far side by end plates (4, 5), wherein one end plate (5) is provided with a supply port (13) connected to the drying section (19) of the supply passage (22) and the other end plate (4) diverts the drying section (19) to the linear section (18) of the supply passage (22) which is represented by the first receiving chambers (16).

11. Valve bank according to claim 9 or 10, **characterised by** a window (21) for viewing a colour change of the desiccant (23) which occurs as it is being saturated with moisture.

12. Valve bank according to any of claims 9 to 11, **characterised by** a photocell for the detection of a colour change of the desiccant (23) which occurs as it is being saturated with moisture.

13. Valve bank according to any of claims 1 to 12, **characterised in that** each valve unit (2) is provided with a pressure tapping passage (54) for detecting the operating pressure which can be tapped at the operating port (12).

14. Valve bank according to any of claims 1 to 13, **characterised in that** the bending transducer (28) is connected to electric connecting contacts (33) which are accessible at a common outer surface (9) of the valve bank (1) extending in the line-up direction (3) for connecting measures, wherein the connecting contacts (33) are expediently fitted with an electronic control unit (67) which expediently comprises at least one circuit board having a main dimensional plane which is oriented parallel to the outer surface (9) of the valve bank (1) defined by the valve units (2), on which outer surface the connecting contacts (33) are located.

15. Valve bank according to any of claims 1 to 14, **characterised in that** between adjacent valve units (2) there is provided an interconnecting plate (6) contributing to the mutual sealing of the valve units (2), which has openings (58) for the fluidic connection of adjacent valve units (2), wherein each valve unit (2) is expediently provided at facing mounting surfaces (46, 47) with a seal structure (57) acting together with the interconnecting plate (6) located in between to form a seal.

## Revendications

1. Batterie de soupapes, avec plusieurs unités de soupape (10) en forme de plaque juxtaposées dans une direction de juxtaposition (3) perpendiculairement à leurs plans d'extension principale (10), qui comprennent à chaque fois au moins un premier élément de commande (24) piézoélectrique placé dans une première chambre de réception (16) traversant l'unité de soupape (2) dans la direction de juxtaposition (3), élément par lequel peut être commandée la liaison fluidique entre un raccord de travail (12) associé individuellement à l'unité de soupape (2) concernée et un canal d'alimentation (22) de la batterie de soupapes associé à toutes les unités de soupape (2) collectivement, **caractérisée en ce que** le canal d'alimentation (22) présente une section de longueur (18) traversant toutes les unités de soupape (2) dans la direction de juxtaposition (3), section qui est formée par les premières chambres de réception (16) en liaison commune des unités de soupape (2) juxtaposées de manière hermétique, dans laquelle un premier débouché de canal (26) relié à chaque fois au raccord de travail (12) de l'unité de soupape (2) se trouve dans les premières chambres de réception (16) et dans lequel les éléments de commande piézoélectriques (24) sont réalisés en transducteurs de flexion (28) s'étendant dans les premières chambres de réception (16) transversalement à la direction de juxtaposition (3), transducteurs qui, en fonction de leurs états d'activation, peuvent libérer ou fermer au choix les premiers débouchés de canaux (26) placés dans la première chambre de réception (16).

2. Batterie de soupapes selon la revendication 1, **caractérisée en ce que** toutes les unités de soupape (2) sont traversées dans la direction de juxtaposition (3) par un canal d'évacuation interne (38) de la batterie de soupape associé en commun, canal par l'intermédiaire duquel le fluide sous pression s'écoulant depuis les raccords de travail (12) peut être évacué de la batterie de soupapes (1).

3. Batterie de soupapes selon la revendication 2, **caractérisée en ce que** dans chaque unité de soupape (2) est formée une deuxième chambre de réception (17) reliée en permanence au raccord de travail (12) associé, depuis laquelle part un premier canal de jonction (44) conduisant au premier débouché de canal (26) dans la première chambre de réception (16) et dans laquelle est placé au moins un deuxième élément de commande piézoélectrique (25) conformé en transducteur de flexion (28) s'étendant transversalement à la direction de juxtaposition (3), élément qui, en fonction de son état d'activation, peut libérer ou fermer au choix un deuxième débouché de canal (27), situé dans la deuxième chambre de réception (17), d'un deuxième canal de jonction (45) de l'unité de soupape (2) relié au canal d'évacuation (38), dans laquelle les deux éléments de commande piézoélectriques (24, 25) peuvent de préférence être commandés électriquement d'une manière indépendante l'un de l'autre.

4. Batterie de soupapes selon la revendication 3, **caractérisée en ce qu'**au moins l'un des canaux de jonction (44, 45) est formé au moins partiellement par un renfoncement de type rainure, qui s'étend dans l'une des deux surfaces de montage (46, 47) de l'unité de soupape (2) orientées dans la direction de juxtaposition (3) et est recouvert par l'unité de soupape (2) suivante qui s'y trouve ou par une plaque intermédiaire (6).

5. Batterie de soupapes selon la revendication 3 ou 4, **caractérisée en ce que** les deux transducteurs de flexion (28) sont placés l'un à côté de l'autre longitudinalement à l'intérieur de l'unité de soupape (2) avec leurs extensions longitudinales mutuellement parallèles.

6. Batterie de soupapes selon l'une des revendications 3 à 5, **caractérisée en ce que** la deuxième chambre de réception (17) est ouverte sur au moins l'une de ses deux faces orientées dans la direction de juxtaposition (3) et est recouverte par l'unité de soupape (2) suivante ou par une plaque intermédiaire (6).

7. Batterie de soupapes selon l'une des revendications 1 à 6, **caractérisée en ce que** le transducteur de flexion (28) au nombre d'au moins un est disposé de telle manière dans l'unité de soupape (2) que son plan de déviation s'étend perpendiculairement au plan d'extension principale (10) de l'unité de soupape (2).

8. Batterie de soupapes selon l'une des revendications 1 à 6, **caractérisée en ce que** le transducteur de flexion (28) au nombre d'au moins un est disposé de telle manière dans l'unité de soupape (2) que son plan de déviation s'étend perpendiculairement au plan d'extension principale (10) de l'unité de soupape (2), dans laquelle les débouchés de canal (26, 27) pouvant être libérés ou fermés au choix par les transducteurs de flexion (28) sont de préférence orientés dans la direction de juxtaposition (3) des unités de soupape (2).

9. Batterie de soupapes selon l'une des revendications 1 à 8, **caractérisée en ce qu'**un moyen de séchage (23) servant à déshumidifier l'air comprimé introduit est placé dans une section de séchage (19) du canal d'alimentation (22) située en amont de la section de longueur (18) du canal d'alimentation (22) formée par les premières chambres de réception (16), dans laquelle la section de séchage (19) du canal d'introduction (22) s'étend de préférence sur toutes les unités de soupape (2) dans la direction de juxtaposition (3).

10. Batterie de soupapes selon la revendication 9, **caractérisée en ce que** la rangée d'unités de soupape (2) est flanquée à chaque fois, de part et d'autre, d'une plaque de fermeture (4, 5), une plaque de fermeture (5) présentant un raccord d'alimentation (13) relié à la section de séchage (19) du canal d'alimentation (22) et l'autre plaque de fermeture (4) déviant la section de séchage (19) en direction de la section de longueur (18) du canal d'alimentation (22) formée par les premières chambres de réception (16).

11. Batterie de soupapes selon la revendication 9 ou 10, **caractérisée par** une fenêtre transparente (21) pour rendre visible un changement de couleur du moyen de séchage (23) se produisant en cas de saturation en humidité.

12. Batterie de soupapes selon l'une des revendications 9 à 11, **caractérisée par** une cellule photoélectrique (72) pour la détection d'un changement de couleur du moyen de séchage (23) se produisant en cas de saturation en humidité.

13. Batterie de soupapes selon l'une des revendications 1 à 12, **caractérisée en ce que** chaque unité de soupape (2) est équipée d'un canal de relevé de pression (54) servant à relever la pression de travail présente sur le raccord de travail (12).

14. Batterie de soupapes selon l'une des revendications 1 à 13, **caractérisée en ce qu'**aux transducteurs de flexion (28) sont reliés des contacts de branchement électrique (33) qui sont accessibles pour des opérations de branchement au niveau d'une surface extérieure (9) de la batterie de soupapes (1) s'étendant dans la direction de juxtaposition (3), dans laquelle une unité de commande électronique (67) est de préférence rapportée sur les contacts de branchement (33), unité qui présente de préférence au moins une platine dont le plan d'extension principale est orienté parallèlement à la surface extérieure (9) de la batterie de soupapes (1), définie par les unités de soupape (2), sur laquelle se trouvent les contacts de branchement (33).

15. Batterie de soupapes selon l'une des revendications 1 à 14, **caractérisée en ce qu'**entre des unités de soupape voisines (2) est placée une plaque intermédiaire (6) participant à l'étanchéité mutuelle des unités de soupape (2), qui dispose de traversées (58) pour la liaison fluidique d'unités de soupape (2) voisines, dans laquelle les unités de soupape (2) présentent de préférence à chaque fois, sur leurs surfaces de montage (46, 47) en vis-à-vis, une structure d'étanchéité (57) coopérant de manière hermétique avec la plaque intermédiaire (6) interposée.
